# DEMANDE DE BREVET EUROPEEN

(11) **EP 3 450 381 A1**
(43) Date de publication de la demande: **06.03.2019**
(21) Numéro de dépôt: 17020400.2
(22) Date de dépôt: 31.08.2017
(51) Int. Cl.: B66C 1/66, B66C 1/62, B29C 31/00

(54) **DISPOSITIF DE LEVAGE**

(71) Demandeur: Rodrigues da Costa, José, 3080-232 Figueira da Foz (PT)
(72) Inventeur: Rodrigues da Costa, José, 3080-232 Figueira da Foz (PT)
(74) Mandataire: Audusseau-Girardeau, Magaly

(57) **Abrégé**

L'invention concerne un dispositif de levage, notamment pour la manutention d'un moule (28), comportant un organe de raccordement (6), apte à être raccordé à un pont de levage, une base de préhension (8), apte à saisir un élément (10) fixé sur un moule. Ladite base de préhension (8) comprend une ouverture centrale (9) apte à recevoir ledit élément (10) fixé sur un moule et un organe de verrouillage (19, 20), apte à verrouiller la position dudit élément (10) dans la base de préhension (8), l'organe de verrouillage (19, 20) étant conçu pour adopter une position de verrouillage et une position de déverrouillage. Le dispositif de levage conforme à l'invention est remarquable en ce qu'il comprend un dispositif de commande automatique (27, 28) pour commander automatiquement le passage de l'organe de verrouillage (19, 20) de la position de verrouillage à la position de déverrouillage ou de la position de déverrouillage à la position de verrouillage, ledit dispositif de commande automatique comprenant au moins un vérin électrique (27, 28).

## Description

L'invention a trait à la manutention de moules, pour la fabrication de pièces par injection de matière plastique ou de Zamac dans un moule.

Elle concerne, par ailleurs, des perfectionnements apportés dans ce domaine.

Les moules sont grandement utilisés dans l'industrie : ils permettent la réalisation de pièces plastiques moulées (boucliers, planches de bord...) en grandes séries : Ils sont montés dans des installations qui assurent l'injection de matière dans le moule.

De tels moules doivent parfois être remplacés par d'autres moules ou être réparés. Leur manutention est spécifique et règlementée : en effet, le poids et l'encombrement de tels moules rendent difficile leur déplacement.

Pour permettre la manutention de tels moules, des installations ont été inventées, mettant en oeuvre des ponts sur lesquels se déplacent des équipements mobiles auxquels on relie les moules via des systèmes d'élingues de levage. Pour accrocher les élingues de levage au moule à déplacer, on équipe le moule de plusieurs anneaux de levage à différents endroits du moule. Une fois les anneaux fixés au moule et les élingues fixées aux anneaux, on commande la levée et le déplacement du moule au moyen des équipements mobiles.

A ce jour, ce procédé est le plus utilisé au monde mais il reste extrêmement dangereux car il implique des risques de chute d'un ouvrier qui doit fixer les élingues de levage aux anneaux ou les décrocher.

On connaît du document US 5 033 784 un dispositif qui s'affranchit de l'utilisation d'anneaux de levage : le dispositif comporte une base de préhension en forme de U inversé dont les bords sont recourbés vers l'intérieur pour former deux rails parallèles. La base de préhension est équipée d'un organe de préhension pour être saisie par un crochet. Les moules sont équipés d'éléments de préhension (plots) dont les têtes sont de dimensions telles qu'elles peuvent entrer latéralement dans la base de préhension et être retenues entre les deux rails. Pour maintenir en place les têtes des éléments de préhension dans la base de préhension du dispositif, on prévoit d'équiper le dispositif d'une barre montée pivotante à l'extrémité du dispositif au voisinage de l'ouverture en U. La barre pivotante est mobile entre une position où elle permet l'introduction des éléments de préhension dans la base, et une position où elle ne permet ni l'introduction des éléments ni leur sortie (pour des questions de sécurités quand le moule est saisie par le dispositif).

Un tel dispositif présente toujours un inconvénient : il est nécessaire qu'un ouvrier intervienne pour faire pivoter la barre et libérer (ou sécuriser) les éléments de préhension de (ou dans) la base.

L'invention propose un dispositif de manutention qui permet de s'affranchir de toute opération manuelle d'accrochage et de décrochage d'élingues dans des anneaux de levage des moules.

L'invention vise à offrir une alternative permettant la manutention des moules d'injection de façon sécurisée pour les ouvriers et de façon plus rapide, en supprimant notamment l'utilisation d'élingues et d'anneaux de levage.

Elle propose à cet effet un dispositif de levage, notamment pour la manutention d'un moule, comportant :
- Un organe de raccordement, apte à être raccordé à un pont de levage,
- Une base de préhension, apte à saisir un élément fixé sur un moule, ladite base de préhension comprenant :
   ∘ Une ouverture centrale apte à recevoir ledit élément fixé sur un moule, et
   ∘ Un organe de verrouillage, apte à verrouiller la position dudit élément dans la base de préhension, l'organe de verrouillage étant conçu pour adopter une position de verrouillage et une position de déverrouillage,
Le dispositif de levage conforme à l'invention est remarquable en ce qu'il comprend un dispositif de commande automatique pour commander automatiquement le passage de l'organe de verrouillage de la position de verrouillage à la position de déverrouillage ou de la position de déverrouillage à la position de verrouillage, ledit dispositif de commande automatique comprenant au moins un vérin électrique.

Grâce à la présence du dispositif de commande et au vérin, le passage de l'organe de verrouillage de la position de verrouillage à la position de déverrouillage se fait automatiquement, sans intervention physique de l'homme.

Le dispositif de levage conforme à l'invention peut également comporter les caractéristiques suivantes, prises séparément ou en combinaison :
- l'organe de verrouillage peut comporter deux éléments formant mâchoire, montés mobiles entre :
   ∘ Une position écartée l'un de l'autre, correspondant à ladite position de déverrouillage de l'organe de verrouillage, et
   ∘ Une position rapprochée l'un de l'autre, correspondant à ladite position de verrouillage de l'organe de verrouillage,
   et le dispositif de commande peut comporter deux vérins électriques, chaque vérin étant associé à un élément formant mâchoire et assurant le mouvement dudit élément de ladite position écartée à ladite position rapprochée et de ladite position rapprochée à ladite position écartée,
- les éléments formants mâchoire peuvent présenter une partie support apte à supporter une partie saillante dudit élément fixé au moule quand les éléments formant mâchoire se trouvent en position rapprochée et que ledit élément fixé au moule se trouve dans la base de préhension,
- la base de préhension peut comporter un logement d'accueil d'une extrémité dudit élément, et en ce que le dispositif de commande comporte un premier capteur de position placé dans ledit logement pour déterminer la présence ou l'absence de ladite extrémité dudit élément dans ledit logement,
- ledit logement d'accueil peut être une cavité présentant une paroi latérale et une paroi de fond, et ledit premier capteur de position peut être positionné dans ladite paroi latérale dudit logement au voisinage de ladite paroi de fond,
- le dispositif de commande peut comporter deux seconds capteurs de position de l'organe de verrouillage, chaque second capteur de position de l'organe de verrouillage étant associé à un élément formant mâchoire, chaque second capteur de position de l'organe de verrouillage étant positionné dans ladite ouverture centrale de la base de préhension, au voisinage d'un plan médian à proximité duquel les deux éléments formant mâchoire se placent en position rapprochée, de sorte à déterminer l'arrivée en position rapprochée de l'élément formant mâchoire auquel chaque second capteur est associé,
- le dispositif de commande peut comporter deux troisièmes capteurs de position de l'organe de verrouillage, chaque troisième capteur de position de l'organe de verrouillage étant associé à un élément formant mâchoire, chaque troisième capteur de position de l'organe de verrouillage étant positionné dans ladite ouverture centrale de la base de préhension, au voisinage d'une paroi latérale de la base de préhension vers laquelle les deux éléments formant mâchoire se placent en position écartée, de sorte à déterminer l'arrivée en position écartée de l'élément formant mâchoire auquel chaque troisième capteur est associé,
- le dispositif de commande peut comporter un module de commande apte à analyser :
   ∘ Des données de position de l'élément fixé sur un moule dans le logement d'accueil fournies par ledit premier capteur de position, et/ou
   ∘ Des données de position de l'organe de verrouillage fournies par ledit second capteur de position et/ou ledit troisième capteur de position,
   pour commander soit la position de verrouillage soit la position de déverrouillage de l'organe de verrouillage,
- Le dispositif de levage peut être équipé d'une colonne lumineuse comportant au moins deux indicateurs lumineux de couleurs différentes, ladite colonne étant associée au dispositif de commande,
- le fonctionnement de ladite colonne lumineuse peut être commandé par ledit module de commande et lesdits au moins deux indicateurs lumineux de la colonne lumineuse sont associés aux positions de verrouillage et de déverrouillage et sont actionnés l'un ou l'autre suivant que l'organe de verrouillage se trouve en position de verrouillage ou en position de déverrouillage.

L'invention concerne également un procédé de mise en oeuvre du dispositif de levage tel que défini ci-dessus.

Le procédé conforme à l'invention comprenant les étapes suivantes pour saisir un élément fixé sur un moule :
a) Introduction de l'élément fixé sur un moule dans la base de préhension jusqu'à ce qu'une extrémité dudit élément entre dans un logement d'accueil de la base de préhension,
b) Détection, par un premier capteur de position, du positionnement de l'extrémité dudit élément dans ledit logement d'accueil et génération d'une première information de détection,
c) Traitement de ladite première information de détection, et
d) Commande de la position de verrouillage de l'organe de verrouillage par le dispositif de commande.

Conformément à l'invention, le procédé peut comporter en outre une étape de levage suivant laquelle le dispositif de levage, en prise avec l'élément fixé sur le moule, est levé et, durant cette étape de levage, l'extrémité dudit élément fixé sur le moule se déplace dans le logement par gravité jusqu'à venir reposer au moins partiellement sur l'organe de verrouillage en position verrouillée, de sorte que le premier capteur de position ne détecte plus la présence de l'extrémité dudit élément fixé sur le moule. Ainsi, la commande de l'ouverture de la mâchoire est sécurisée, car pour déverrouiller à nouveau il peut être prévu qu'un capteur confirme la présence de l'élément en place.

Suivant un mode de mis en oeuvre avantageuse, pour libérer l'élément fixé au moule, le procédé comporte les étapes suivantes :
e) Descente du dispositif de levage jusqu'à faire reposer le moule sur un support,
f) Déplacement d'une extrémité dudit élément fixé sur le moule dans le logement jusqu'à la détection, par le premier capteur de position, de la présence de l'extrémité de l'élément fixé sur le moule, et
g) Commande de la position de déverrouillage de l'organe de verrouillage.

Dans un mode de mise en oeuvre avantageux, la commande de la position de verrouillage et/ou de déverrouillage se fait par transmission d'un ordre à partir d'un appareil de commande à distance.

Suivant une variante de réalisation, le procédé comporte en outre les étapes suivantes, après commande de la position de verrouillage, pour signaler visuellement la position de l'organe de verrouillage :
h) Détection de la position de l'organe de verrouillage en position de verrouillage par un second capteur de position, et génération d'une seconde information de détection, ou
   Détection de la position de l'organe de verrouillage en position de déverrouillage par un troisième capteur de position et génération d'une troisième information de détection,
i) Traitement de ladite seconde information de détection, ou Traitement de ladite troisième information de détection, respectivement, et
j) Allumage d'un premier indicateur lumineux d'une colonne lumineuse, signalant visuellement que l'organe de verrouillage est en position de verrouillage, en réponse au traitement de ladite seconde information de détection, ou
   Allumage d'un second indicateur lumineux de la colonne lumineuse, signalant visuellement que l'organe de verrouillage est en position de déverrouillage, en réponse au traitement de ladite troisième information de position, respectivement.

Pour pouvoir être exécutée, l'invention est exposée de façon suffisamment claire et complète dans la description suivante qui est, en plus, accompagnée de dessins dans lesquels :
- La figure 1 est une vue de côté d'un dispositif de levage conforme à l'invention,
- La figure 2 est une autre vue de côté du dispositif de levage montré en figure 1,
- La figure 3 est une vue de coupe suivant le plan A-A montré en figure 1,
- La figure 4 est encore une autre vue de côté du dispositif de levage montré en figure 1 et 2,
- La figure 5 est une vue de coupe suivant le plan B-B montré en figure 4,
- La figure 6 est une vue de coupe transversale du dispositif de levage montré sur les figures précédentes, l'organe de verrouillage étant en position déverrouillée,
- La figure 7 est une vue de coupe transversale du dispositif de levage montré sur les figures précédentes, l'organe de verrouillage étant en position vérrouillée,
- La figure 8 montre le dispositif conforme à l'invention positionné au-dessus d'un élément fixé sur un moule, l'élément et le moule étant montrés en vue de coupe et le moule n'étant montré que partiellement,
- La figure 9 montre le dispositif conforme à l'invention dont la base de préhension accueille l'élément fixé au moule, à l'introduction de l'élément dans le dispositif, l'élément et le moule étant montrés en vue de coupe et le moule n'étant montré que partiellement,
- Et la figure 10 montre le dispositif conforme à l'invention saisissant l'élément fixé au moule, au moment du déplacement du moule, la base de préhension accueillant l'élément fixé au moule, l'élément et le moule étant montrés en vue de coupe et le moule n'étant montré que partiellement.

Dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention.

Toutes les figures illustrent un seul et même mode de réalisation. Il devra être compris que l'invention n'est pas limitée à cet unique mode de réalisation : des variantes dans les formes et dans le positionnement de certains éléments pourraient être envisagées sans sortir du cadre de l'invention.

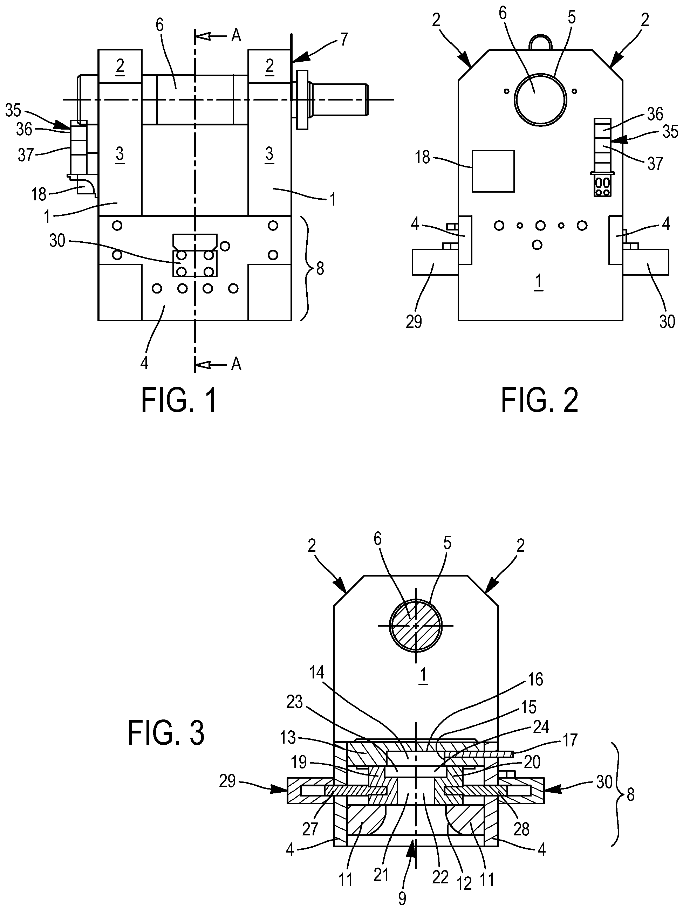

La figure 1 montre un dispositif de levage conforme à l'invention qui comporte deux parois 1, verticales, de forme générale rectangulaire, dont les deux coins supérieurs 2 ont été tronqués.

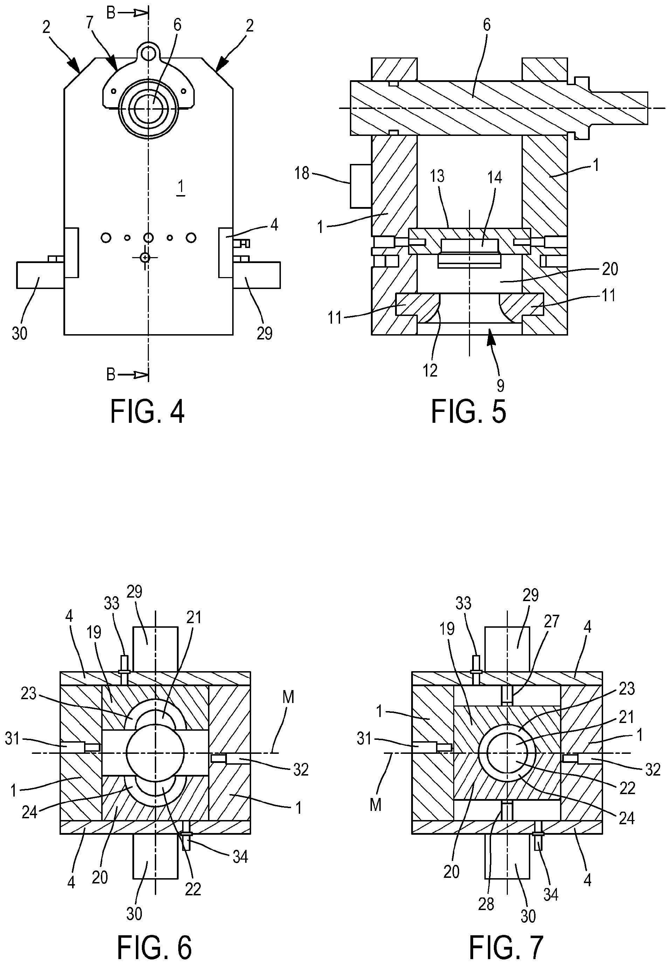

Les parois 1 sont parallèles entre elles et elles sont solidarisées par leur tranche 3 à deux plaques 4 en forme de T, de sorte que les parois 1 et les plaques 4 forment les parois extérieures d'un objet de section carrée ou rectangulaire (voir figure 6 ou 7).

Chacune des moitiés supérieures des parois 1 présente une ouverture circulaire 5 (de même diamètre et au même niveau) à travers laquelle est placé un bras 6 : le bras 6 traverse ainsi les deux parois 1.

La position du bras 6 traversant les parois 1 est sécurisée par un système 7 à guillotine montré en figures 1 et 4 : le système à guillotine consiste en un élément, plat, en forme de croissant de lune, qui est monté mobile verticalement. La tranche inférieure de l'élément rentre dans une rainure périphérique ménagée dans le bras 6 ou bien la tranche inférieure prend appui entre deux éléments fixés sur la surface du bras 6. Ainsi, le bras ne peut pas se déplacer axialement dans les ouvertures 5, ce qui sécurise sa position par rapport aux parois 1.

Le bras 6 constitue l'organe de raccordement du dispositif de levage car il permet de raccorder le dispositif de levage à un pont de levage, par exemple à l'aide d'un crochet.

La moitié inférieure des parois 1 et les plaques 4 forment les parois d'une base de préhension 8 du dispositif de levage.

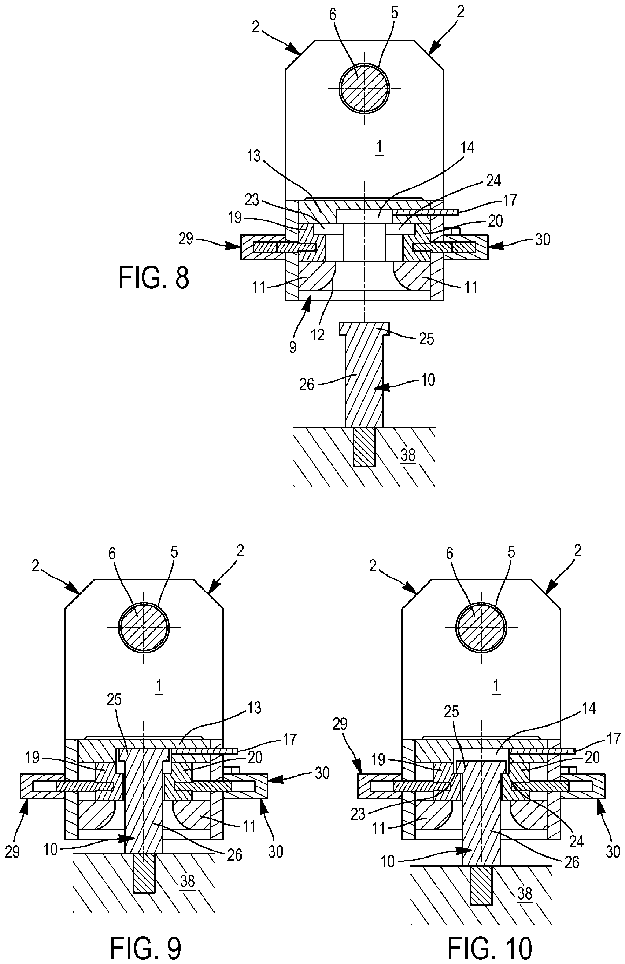

La base de préhension 8 comporte une ouverture centrale 9 par laquelle un élément extérieur peut être introduit (dans le cas présent, l'élément extérieur est un plot 10 fixé sur un moule - voir figures 8 à 10).

Pour délimiter l'ouverture centrale et assurer un guidage du plot, on prévoit des pièces de guidage 11 qui sont fixées sur la face interne des parois 1 et des plaques 4 (voir figures 3 et 5 par exemple).

Les pièces de guidage 11 présentent une section sensiblement triangulaire avec deux côtés à angle droit et un côté courbe dont la concavité est tournée vers l'angle formé par les deux côtés à angle droit. De cette façon, l'élément extérieur prend appui sur des surfaces courbes 12 pour être dirigé vers l'intérieur de la base de préhension, les surfaces courbes assurant une introduction et un guidage en douceur du plot 10.

La base de préhension 8 comporte également une paroi sommitale 13 qui relie les deux parois 1 et qui est perpendiculaire aux parois 1.

La paroi sommitale 13 comporte, sensiblement en son centre, un logement d'accueil 14 d'une extrémité 25 d'un élément 10 (ou plot 10) qui sera décrit par la suite.

Dans le cadre de cet exemple, le logement d'accueil 14 est de forme sensiblement circulaire pour accueillir une tête de plot (extrémité de l'élément) elle-même de forme sensiblement circulaire.

La forme circulaire permet de centrer plus facilement un élément. Mais il devra être entendu que l'invention n'est pas limitée à la création d'un logement d'accueil de forme spécifique circulaire : d'autres formes pourraient être envisagées sans sortir du cadre de l'invention.

Le logement d'accueil 14 présente une paroi latérale circulaire interne 15 et un fond sensiblement plat 16.

Le logement d'accueil 14 est équipé d'un premier capteur de position 17, qui est placé dans la paroi latérale 15 au voisinage du fond 16 du logement 14.

Ce premier capteur de position 17 permet de détecter la présence de la tête du plot 10 arrivée au fond du logement d'accueil 14.

Le premier capteur de position 17 est relié à un module de commande 18 qui est fixé sur une paroi 1.

Le module de commande 18 est apte à analyser les données de position qui lui sont transmises par le capteur de position 17. Les données de position transmises par le premier capteur de position sont de deux sortes : présence de la tête de plot au fond du logement ou absence de la tête de plot.

Le module de commande est également enfermé dans un boîtier qui sert au raccordement électrique du dispositif de levage conforme à l'invention.

Conformément à l'invention, le dispositif de levage comporte un organe de verrouillage, assurant le verrouillage ou de déverrouillage de la position d'un élément (ou plot 10) dans la base de préhension 8, ainsi qu'un dispositif de commande, qui commande la position de verrouillage ou de déverrouillage de l'organe de verrouillage.

Il va maintenant être fait référence à ces deux caractéristiques propres à l'invention en nous appuyant plus particulièrement sur les figures 3 et 6 à 10.

L'organe de verrouillage comporte deux éléments dans le cadre de ce mode de réalisation : il s'agit des éléments portant les références 19 et 20 sur les figures 3 et 5 à 10.

Les deux éléments formant mâchoire 19 et 20 sont montés mobiles entre deux positions : une position écartée (montrée en figures 6 et 8) et une position rapprochée (montrée en figures 3, 7, 9 et 10). En position écartée, les deux éléments 19 et 20, formant mâchoire, se trouvent positionnés contre la plaque 4 en forme de T (les plaques 4 formant chacune une paroi latérale pour la base de préhension 8).

La position écartée des éléments 19 et 20 correspond à la position de déverrouillage : en effet, dans cette position, les éléments 19 et 20 ne peuvent pas enserrer de plot à cause de la distance qui les sépare. Le plot peut ainsi librement entrer ou sortir de la base de préhension.

La position rapprochée des éléments 19 et 20 correspond à la position de verrouillage : en effet, dans cette position, les éléments 19 et 20 sont rapprochés vers un plan médian M de la base de préhension jusqu'à se toucher suivant le plan médian M. Dans cette position, le plot 10 est serré entre les deux éléments 19 et 20.

Pour permettre d'accueillir le plot 10, les deux éléments 19 et 20, formant mâchoire, comportent une cavité latérale 21 et 22, capable d'accueillir partiellement un corps de plot 10.

Les deux éléments 19 et 20 comportent également une partie d'accueils 23 et 24, respectivement, pour accueillir la tête du plot (c'est-à-dire l'extrémité de l'élément fixé au moule).

Le plot est illustré en particulier sur les figures 8 à 10: les plots se présentent sous une forme proche de celle d'un champignon, avec une tête saillante 25 et un corps 26. Quand le plot est inséré dans la base de préhension 8, la tête de plot 25 est accueillie dans le logement d'accueil 14 et/ou dans la partie d'accueil les éléments formant mâchoire. Quant au corps de plot 26, il est accueilli dans les cavités latérales 21 et 22 des deux éléments 19 et 20 formant mâchoire.

L'organe de verrouillage est mu dans sa position de verrouillage ou dans sa position de déverrouillage grâce à un dispositif de commande automatique que comporte le dispositif de levage.

Le dispositif de commande automatique comporte, dans le cadre de l'exemple représenté sur les figures, deux vérins électriques : un premier vérin électrique 27 est relié à l'élément 19 formant mâchoire et un autre vérin électrique 28 est relié à l'élément 20 formant mâchoire (voir figure 3).

Les vérins électriques 27 et 28 poussent ou tirent les éléments 19 et 20, de manière à les rapprocher l'un de l'autre jusqu'à la position de verrouillage ou de manière à les écarter l'un de l'autre jusqu'à la position de déverrouillage. Autrement dit, les vérins 27 et 28 assurent les mouvements des deux éléments 19 et 20 dans leur position rapprochée et dans leur position écartée.

Les éléments 19 et 20 sont guidés dans leur déplacement entre deux parois parallèles entre elles et internes à la base de préhension 8 : les deux parois sont constituées par la surface supérieure des éléments de guidage 11 et par la surface inférieure de la paroi sommitale 13.

Les vérins 27 et 28 comportent des boîtiers de vérin 29 et 30, respectivement, qui sont situés de part et d'autre des éléments 19 et 20.

La commande est dite ici « automatique » car, d'une part, elle n'est pas réalisée manuellement : ce n'est pas l'homme qui déplace manuellement les éléments formant mâchoire, ou plus généralement, ce n'est pas l'homme qui intervient physiquement pour faire passer l'organe de verrouillage de sa position de verrouillage à sa position de déverrouillage et inversement. Par « automatique », on comprend : « sans intervention physique directe de l'homme ».

Le caractère automatique du dispositif de commande se comprend également comme pouvant être induit par un ensemble de moyens électroniques et mécaniques mettant en oeuvre un automatisme prédéterminé.

Dans le cadre de cet exemple de réalisation, le dispositif de commande comporte également une série de capteurs de position qui conditionnent le passage de l'organe de verrouillage (les éléments 19 et 20 dans le cas présent) de la position de verrouillage à la position de déverrouillage (voir figures 6 et 7).

Des capteurs de position 31 et 32 sont placés dans l'ouverture centrale de la base de préhension 8 au voisinage du plan médian M, à travers les parois 1. Pour une facilité de compréhension de la présente description, les capteurs portant les références 31 et 32 seront appelés « seconds capteurs de position », par opposition au premier capteur de position portant la référence 17 et situé dans le logement d'accueil 14.

Les seconds capteurs de position 31 et 32 détectent les éléments 19 et 20 formant mâchoire quand ils se trouvent en position rapprochée (c'est-à-dire quand ils se trouvent en position de verrouillage - voir figure 7). Les vérins communiquent cette information (donnée de position de l'organe de verrouillage) au module de commande 18 avec lequel ils sont reliés.

D'autres capteurs de position 33 et 34 sont placés également dans l'ouverture centrale de la base de préhension, sur la plaque 4 formant paroi latérale, à proximité des boîtiers 29 et 30 des vérins 27 et 28. Ils seront appelés troisièmes capteurs de position 33 et 34.

Comme pour les seconds capteurs 31 et 32, les troisièmes capteurs de position 33 et 34 sont reliés chacun à un vérin 27 et 28, respectivement et ils détectent la position écartée des éléments 19 et 20 (voir figure 6). Les troisièmes capteurs de position 33 et 34 sont reliés au module de commande 18 et transmettent des informations (données de position) sur la position écartée des éléments 19 et 20 formant mâchoire.

Le dispositif de commande, comprenant le module de commande, est donc apte à commander le fonctionnement des vérins 27 et 28 pour faire passer les éléments 19 et 20 formant mâchoire d'une position de verrouillage à une position de déverrouillage détectée par les seconds et troisièmes capteurs de position. Lorsque les positions sont atteintes, elles sont ainsi détectées et le module de commande peut arrêter le fonctionnement des vérins.

Pour permettre un repère visuel de l'état de fonctionnement du dispositif de levage, on prévoit d'équiper le dispositif de levage avec une colonne lumineuse 35 qui comporte au moins deux indicateurs lumineux de différentes couleurs.

La colonne lumineuse est fixée sur une paroi 1 (voir figures 1 et 2) et est reliée au dispositif de commande, qui commande :
- soit l'allumage d'un indicateur lumineux 36 (par exemple vert) si les éléments formant mâchoire 19 et 20 (organe de verrouillage) sont en positon déverrouillée (repérée par les troisièmes capteurs 33 et 34)
- soit l'allumage de l'autre indicateur lumineux 37 (par exemple rouge) si les éléments formant mâchoire 19 et 20 sont en position verrouillée (repérée par les second capteurs 31 et 32).

Il peut être prévu un troisième indicateur lumineux en cas de défaillance du module de commande du dispositif de levage pour prévenir visuellement les ouvriers d'un problème de fonctionnement.

Il va maintenant être fait référence au procédé de mise en oeuvre d'un tel dispositif de levage en faisant notamment référence aux figures 8 à 10 :

Un moule 38 est équipé d'un plot 10 (le plot 10 est par exemple fixé par vissage sur le moule 38).

Le dispositif de levage est amené par un pont de levage (non représenté) au-dessus du moule 38 et du plot 10. Les éléments formant mâchoire 19 et 20 sont en position de déverrouillage, laissant libre le passage du plot 10 dans la base de préhension 8. La colonne lumineuse affiche un indicateur lumineux 36 de couleur verte. Le dispositif est comme illustré en figure 8.

Le dispositif de levage est suspendu au-dessus du moule en étant relié au pont de levage par un crochet (non illustré) entourant le bras 6.

Le dispositif de levage est descendu en actionnant la descente du crochet (moyens de commande du pont de levage): le plot 10 s'introduit dans le dispositif de levage par l'ouverture 9 et est guidé par les pièces de guidage 11 jusqu'à ce que la tête 25 du plot 10 s'introduise dans le logement d'accueil 14 et vienne buter contre son fond 16. A ce stade, le premier capteur de position 17 détecte la position de la tête 25 du plot dans le logement. Il génère alors une première information de détection qu'il transmet au module de commande 18.

Le module de commande 18 autorise alors le passage des éléments formant mâchoire de leur position de déverrouillage à leur position de verrouillage. La commande de ce passage se fait soit automatiquement, soit en commandant à distance ce passage via un appareil du type tablette, smartphone ou via un boîtier de commande relié au pont de levage. Il pourrait également être prévu une commande à distance par un ordinateur (boîtier de commande, poste de contrôle etc).

Les vérins électriques 27 et 28 sont alors actionnés et les éléments formant mâchoire se rapprochent l'un de l'autre jusqu'à venir enserrer le corps 26 du plot 10.

Le dispositif est alors comme montré en figure 9.

Quand la position de verrouillage est atteinte (position rapprochée des éléments 19 et 20), les deuxièmes capteurs de position informent le module de commande 18 qui arrête la course du vérin et commande l'allumage de l'indicateur lumineux 37 (rouge).

Le dispositif de levage peut alors être remonté par le pont de levage pour être transporté dans un autre endroit de l'usine.

En remontant le dispositif de levage, la tête 25 de plot 10 redescend dans le logement d'accueil par gravité jusqu'à venir se positionner contre la partie d'accueil 23 et 24 de chacun des deux éléments formant mâchoire 19 et 20.

En effet, les parties d'accueil 23 et 24 sont des parties formant support, aptes à supporter la tête de plot (partie saillante du plot) quand les éléments 19 et 20 se trouvent en position rapprochée et quand le plot est dans la base de préhension.

Dans cette position, le premier capteur de position ne détecte plus la présence de la tête de plot et en informe le module de commande.

Si le module de commande est informé de cette absence de détection, il interdit tout fonctionnement des vérins 27 et 28 et donc tout déverrouillage des éléments formant mâchoire.

Ceci assure une sécurité pour les ouvriers : le moule ne peut alors pas se détacher du dispositif de levage.

Pour libérer le moule 38, le dispositif de levage est abaissé par commande du pont de levage jusqu'à ce que le moule repose sur un support.

En posant le moule, le dispositif de levage continue de descendre légèrement et la tête 25 du plot remonte dans le logement d'accueil 14 jusqu'à venir en butée contre le fond 16.

Le premier capteur de position détecte alors la présence de la tête 25 de plot et en informe le module de commande 18.

Le module de commande 18 autorise alors le passage des éléments formant mâchoire de leur position de verrouillage à leur position de déverrouillage. La commande de ce passage se fait soit automatiquement, soit en commandant à distance ce passage via un appareil du type tablette, smart phone ou ordinateur (poste de contrôle etc).

Les vérins sont alors actionnés jusqu'à ce que les éléments formant mâchoire 19 et 20 arrivent en position écartée et que cette position soit détectée par les troisièmes capteurs de position 33 et 34.

Les troisièmes capteurs de position avertissent alors le module de commande qui arrête la course des vérins 27 et 28 et transmet un ordre d'allumage de l'indicateur lumineux vert à la colonne lumineuse.

On comprend, de ce qui précède, comment l'invention permet de saisir et de déplacer un moule équipé d'un élément (de type plot 10, par exemple).

Le dispositif de levage décrit peut être conçu dans différentes gammes pour soulever des moules dont le poids est compris :
- Entre 2 et 9 Tonnes, ou
- Entre 10 et 15 Tonnes, ou
- Entre 16 et 29 Tonnes, ou
- Et entre 30 et 60 Tonnes.

## Revendications

1. Dispositif de levage, notamment pour la manutention d'un moule (28), comportant :
- Un organe de raccordement (6), apte à être raccordé à un pont de levage,
- Une base de préhension (8), apte à saisir un élément (10) fixé sur un moule, ladite base de préhension (8) comprenant :
∘ Une ouverture centrale (9) apte à recevoir ledit élément (10) fixé sur un moule, et
∘ Un organe de verrouillage (19, 20), apte à verrouiller la position dudit élément (10) dans la base de préhension (8), l'organe de verrouillage (19, 20) étant conçu pour adopter une position de verrouillage et une position de déverrouillage,
**Caractérisé en ce qu'**il comprend un dispositif de commande automatique (27, 28) pour commander automatiquement le passage de l'organe de verrouillage (19, 20) de la position de verrouillage à la position de déverrouillage ou de la position de déverrouillage à la position de verrouillage, ledit dispositif de commande automatique comprenant au moins un vérin électrique (27, 28).

2. Dispositif de levage selon la revendication 1, **caractérisé en ce que** l'organe de verrouillage comporte deux éléments (19, 20) formant mâchoire, montés mobiles entre :
∘ Une position écartée l'un de l'autre, correspondant à ladite position de déverrouillage de l'organe de verrouillage, et
∘ Une position rapprochée l'un de l'autre, correspondant à ladite position de verrouillage de l'organe de verrouillage,
Et **en ce que** le dispositif de commande (27, 28) comporte deux vérins électriques (27, 28), chaque vérin (27, 28) étant associé à un élément formant mâchoire (19, 20) et assurant le mouvement dudit élément formant mâchoire de ladite position écartée à ladite position rapprochée et de ladite position rapprochée à ladite position écartée.

3. Dispositifs de levage selon la revendication 2, **caractérisé en ce que** les éléments formants mâchoire (19, 20) présentent une partie support (23, 24) apte à supporter une partie saillante (25) dudit élément (10) fixé au moule (28) quand les éléments formant mâchoire (19, 20) se trouvent en position rapprochée et quand ledit élément (10) fixé au moule se trouve dans la base de préhension (8).

4. Dispositif de levage selon l'une quelconque des revendications précédentes, **caractérisé en ce que** la base de préhension (8) comporte un logement d'accueil (14) d'une extrémité (25) dudit élément (10), et **en ce que** le dispositif de commande comporte un premier capteur (17) de position, placé dans ledit logement d'accueil (14), pour déterminer la présence ou l'absence de ladite extrémité (25) dudit élément (10) dans ledit logement d'accueil (14).

5. Dispositif de levage selon la revendication 4, **caractérisé en ce que** ledit logement d'accueil (14) est une cavité présentant une paroi latérale (15) et une paroi de fond (16), et **en ce que** ledit premier capteur (17) de position est positionné dans ladite paroi latérale (14) dudit logement d'accueil (14), au voisinage de ladite paroi de fond (16).

6. Dispositif de levage selon la revendication 2 ou 3, **caractérisé en ce que** le dispositif de commande comporte deux seconds capteurs (31, 32) de position de l'organe de verrouillage (19, 20), chaque second capteur (31, 32) de position de l'organe de verrouillage (19, 20) étant associé à un élément formant mâchoire (19, 20), chaque second capteur (31, 32) de position de l'organe de verrouillage (19, 20) étant positionné dans ladite ouverture centrale (9) de la base de préhension (8), au voisinage d'un plan médian (M) à proximité duquel les deux éléments formant mâchoire (19, 20) se placent en position rapprochée, de sorte à déterminer l'arrivée en position rapprochée de l'élément formant mâchoire (19 ; 20) auquel chaque second capteur (31, 32) est associé.

7. Dispositif de levage selon l'une quelconque des revendication 2, 3 ou 6, **caractérisé en ce que** le dispositif de commande comporte deux troisièmes capteurs (33, 34) de position de l'organe de verrouillage (19, 20), chaque troisième capteur (33, 34) de position de l'organe de verrouillage (19, 20) étant associé à un élément formant mâchoire (19, 20), chaque troisième capteur (33, 34) de position de l'organe de verrouillage (19, 20) étant positionné dans ladite ouverture centrale (9) de la base de préhension (8), au voisinage d'une paroi latérale (4) de la base de préhension (8) vers laquelle les deux éléments formant mâchoire (19, 20) se placent en position écartée, de sorte à déterminer l'arrivée en position écartée de l'élément (19; 20) formant mâchoire auquel chaque troisième capteur (33, 34) est associé.

8. Dispositif de levage selon l'une quelconque des revendications 4 à 7, **caractérisé en ce que** le dispositif de commande comporte un module de commande (18), apte à analyser :
- Des données de position de l'élément (10) fixé sur un moule dans le logement d'accueil (14), fournies par ledit premier capteur de position (17), et/ou
- Des données de position de l'organe de verrouillage (19, 20), fournies par ledit second capteur (31, 32) de position et/ou ledit troisième capteur (33, 34) de position,
Pour commander soit la position de verrouillage soit la position de déverrouillage de l'organe de verrouillage.

9. Dispositif de levage selon l'une quelconque des revendications précédentes, **caractérisé en ce qu'**il est équipé d'une colonne lumineuse (35) comportant au moins deux indicateurs lumineux (36, 37) de couleurs différentes, ladite colonne lumineuse (35) étant associée au dispositif de commande.

10. Dispositif selon les revendications 8 et 9, **caractérisé en ce que** le fonctionnement de ladite colonne lumineuse (35) est commandé par ledit module de commande (18) et **en ce que** lesdits au moins deux indicateurs lumineux (36, 37) de la colonne lumineuse sont associés aux positions de verrouillage et de déverrouillage et sont actionnés l'un ou l'autre suivant que l'organe de verrouillage (19, 20) se trouve en position de verrouillage ou en position de déverrouillage.

11. Procédé de mise en oeuvre d'un dispositif selon l'une quelconque des revendications précédentes, pour saisir un élément (10) fixé sur un moule (38), ledit procédé comprenant les étapes suivantes :
- Introduction de l'élément (10) fixé sur le moule (38) dans la base de préhension (8), jusqu'à ce qu'une extrémité (25) dudit élément (10) entre dans un logement d'accueil (14) de la base de préhension (8),
- Détection, par un premier capteur de position (17), du positionnement de l'extrémité (25) dudit élément (10) dans ledit logement d'accueil (14), et génération d'une première information de détection,
- Traitement de ladite première information de détection, et
- Commande de la position de verrouillage de l'organe de verrouillage (19, 20) par le dispositif de commande.

12. Procédé selon la revendication 11, **caractérisé en ce qu'**il comporte en outre une étape de levage suivant laquelle le dispositif de levage, en prise avec l'élément (10) fixé sur le moule (38), est levé et **en ce que**, durant cette étape de levage, l'extrémité (25) dudit élément (10) fixé sur le moule (38) se déplace dans le logement d'accueil (14) par gravité jusqu'à venir reposer au moins partiellement sur l'organe de verrouillage (19, 20) en position verrouillée, de sorte que le premier capteur de position (17) ne détecte plus la présence de l'extrémité (25) dudit élément (10) fixé sur le moule (38).

13. Procédé selon l'une quelconque des revendications 11 ou 12, **caractérisé en ce que**, pour libérer l'élément (10) fixé sur le moule (38), il comporte les étapes suivantes :
- Descente du dispositif de levage jusqu'à faire reposer le moule (38) sur un support,
- Déplacement d'une extrémité (25) dudit élément (10) fixé sur le moule (38) dans le logement (14) jusqu'à la détection, par le premier capteur de position (17), de la présence de l'extrémité (25) de l'élément (10) fixé sur le moule (38), et
- Commande de la position de déverrouillage de l'organe de verrouillage (19, 20).

14. Procédé selon l'une quelconque des revendications 11 à 13, **caractérisé en ce que** la commande de la position de verrouillage et/ou de déverrouillage se fait par transmission d'un ordre à partir d'un appareil de commande à distance.

15. Procédé selon l'une quelconque des revendications 11 à 14, **caractérisé en ce qu'**il comporte en outre les étapes suivantes, après commande de la position de verrouillage, pour signaler visuellement la position de l'organe de verrouillage (19, 20) :
- Détection de la position de l'organe de verrouillage (19, 20) en position de verrouillage par au moins un second capteur de position (31, 32) et génération d'une seconde information de détection, ou Détection de la position de l'organe de verrouillage (19, 20) en position de déverrouillage par au moins un troisième capteur de position (33, 34) et génération d'une troisième information de détection,
- Traitement de ladite seconde information de détection, ou Traitement de ladite troisième information de détection, respectivement, et
- Allumage d'un premier indicateur lumineux (37) d'une colonne lumineuse (35), signalant visuellement que l'organe de verrouillage (19, 20) est en position de verrouillage, en réponse au traitement de ladite seconde information de détection, ou
Allumage d'un second indicateur lumineux (36) de la colonne lumineuse (35), signalant visuellement que l'organe de verrouillage (19, 20) est en position de déverrouillage, en réponse au traitement de ladite troisième information de position, respectivement.
